# EUROPEAN PATENT APPLICATION

(11) **EP 1 677 300 A1**
(43) Date of publication of application: **05.07.2006**
(21) Application number: 04773490.0
(22) Date of filing: 22.09.2004
(51) Int. Cl.: G11B 20/10

(54) **INFORMATION RECORDER, RECORDING PROGRAM AND RECORDING MEDIUM**

(30) Priority: 21.10.2003 JP 2003360256
(71) Applicant: Konica Minolta Photo Imaging, Inc., Shinjuku-ku, Tokyo 163-0512 (JP)
(72) Inventor: UEDA, Yutaka, Konica Minolta Photo Imaging, Inc., Hachioji-shi, Tokyo 192-8505 (JP)
(74) Representative: Roberts, Mark Peter
(86) International application number: PCT/JP2004/014316
(87) International publication number: WO 2005/038802

(57) **Abstract**

The present invention provides an information recording apparatus, a recording program by which inputted data can be written only in a specific recording medium, and a recording medium in which the inputted data can be written. This information recording apparatus is at least provided with: a means for inputting the data; a means for extracting information for discriminating the recording medium from a specific area of the recording medium; and a means by which the extracted information and a predetermined information are compared to each other, and when the extracted information is coincident to the predetermined information, the inputted data is recorded in the recording medium.

## Description

### TECHNICAL FIELD

The present invention relates to an information recording apparatus for recording inputted data, a recording program and a recording medium in which the inputted data is recorded.

### BACKGROUND TECHNOLOGY

Recently, various services relating to the photography are offered. For example, the user takes a picture by a digital camera, bring the digital camera in which an image data of a photo is recorded, or medium for the digital camera in a photographic shop such as a mini-lab, and by using an unmanned terminal device provided in the shop (KIOSK) or shop terminal device, the image data recorded in the digital camera or medium can be written in a recording medium such as a CD-R, DVD-R.

Further, the user takes a picture by a film camera, and when he brings the photographed film in a photographic shop such as a mini-lab, in the photographic shop, after the film is developed, a service in which image data is read by using a reading device such as a scanner, and writes it in a recording medium such as a CD-R, DVD-R, and offers to the user, is also conducted (For example, Tokkaihei No. 5-182373) .

Further, a service in which a file format is converted so that image data read from the digital camera or medium, film can be reproduced by an image reproducing device, for example, such as a DVD player or DVD recorder, and the initial image data and the converted image data are written in a recording medium such as a CD-R, DVD-R, is also conducted.

Then, the user inserts the recording medium in which the image data is written, into a personal computer, and by using an application program such as a slide-show program which is installed in the personal computer, display, edition, image processing of the image data are conducted, and he can use the image data by displaying the image data by inserting the recording medium into the image reproducing device.

For traders who offer the above described services, it is desirable that the data writing is conducted by using a recording medium such as a CD-R, or DVD-R, whose company offers, however, in a conventional recording medium, there is no medium in which information used in a program for controlling the writing of data is written, further, in an information recording apparatus, because there is no apparatus having a function which controls the writing by using information written in the recording medium, data can be written in an arbitrary recording medium, as the result, the acceleration of the use of the recording medium which is offered by the service offerer, can not be intended. Further, this problem is not limited to image data, but it is generated in the same manner relating also to musical composition sound data, data such as contents, application.

### DISCLOSURE OF THE INVENTION

In view of the above-described problem, the main object of the present invention is to provide an information recording apparatus, a recording program by which inputted data can be written only into a specific recording medium and such a recording medium in which the inputted data can be written.

In order to attain the above-object, an information recording apparatus of the present invention at least has: a means for inputting data; a means for extracting information for discriminating a recording medium from a specific area of the recording medium; and a means by which the extracted information and predetermined information are compared, and when the extracted information and predetermined information are coincident to each other, the inputted data is recorded in the recording medium.

Further, the recording program of the present invention functions a computer at least as a means for extracting information for discriminating a recording medium from a specific area of the recording medium; and a means by which the extracted information and predetermined information are compared, and when the extracted information and predetermined information are coincident to each other, the inputted data is recorded in the recording medium.

In the present invention, the specific area can be an area outside the logical address of a disk type recording medium.

Further, in the present invention, the data is one or a plurality of data selected from static image data, moving image data, musical composition sound data, contents, application, and it is preferable that the data includes any one of data which is offered by an user, data previously stored in a memory means, or data which is down loaded through a communication network.

Further, the recording medium of the present invention is a medium in which the information which is used in a specific program and for discriminating the recording medium, is previously recorded in a specific area.

In the present invention, the specific program can be a program which refers to the information and judges whether inputted data is recorded or not.

In this manner, in the recording medium of the present invention, the information which is used in the recording program and for discriminating the recording medium, is recorded in a specific area such as outside the logical address area, and in the recording program or in the information recording apparatus which functions by the recording program, the information is extracted from the specific area of the recording medium, and because only when the information is coincident to the predetermined information, the inputted data (image data, musical composition sound data, contents, application) are recorded in the recording medium, the service offerer can intend the acceleration of the use of the recording medium offered by his company.

That is, according to the information recording apparatus, recording program and the recording medium of the present invention, the inputted data can be recorded only into the specific recording medium.

The reason is a fact that, in the recording medium, the discriminating information which is used in the specific recording program, for discriminating the recording medium is recorded in the specific area (for example, outside the logical address area to which an OS of the personal computer can not ordinarily access) and in the recording program or in the information recording apparatus which functions by the recording program, the above-described discriminating information is extracted from the specific area of the recording medium, and only when the discriminating information is coincident to the previously recorded information, the inputted data (image data or musical composition sound data, contents, application) is recorded. Then, when such a structure is provided, the service offerer can intend the acceleration of the use of the recording medium whose company offers.

### BRIEF DESCRIPTION OF THE DRAWINGS

Fig. 1 is an appearance view showing the structure of an information recording apparatus according to the first Example of the present invention.
Fig. 2 is an appearance view showing another structure of an information recording apparatus according to the first Example of the present invention.
Fig. 3 is an appearance view showing a yet another structure of an information recording apparatus according to the first Example of the present invention.
Fig. 4 is an appearance view showing a further yet another structure of an information recording apparatus according to the first Example of the present invention.
Fig. 5 is a block diagram showing a function of an information recording apparatus according to the first Example of the present invention.
Fig. 6 is a flowchart showing the manufacturing steps of the information recording medium by using the information recording apparatus according to the first Example of the present invention.
Fig. 7 is a conceptual view showing an address area of the recording medium.
Fig. 8 is a perspective view showing the structure of the recording medium (CD-R).

### MOST PREFERRED EMBODIMENT FOR EXECUTING THE INVENTION

The recording program according to the present invention is, in its preferred embodiment, a computer is made to function as data recording means, a discrimination information extraction means for extracting discrimination information for discriminating a recording medium which is used in the recording program from the specific area of the recording medium such as at least CD-R, DVD-R, and the extracted discrimination information and predetermined information are compared to each other, and when the discrimination information and the predetermined information are coincident to each other, the computer is made to function as data recording means, the computer is made to function as data recording means for recording the inputted data (static image data, moving image data, musical data, contents, application) in the recording medium, and when the above-described information is previously written in the specific area (preferably, outside the logical address area), the acceleration of the use of recording medium which is offered by the service offerer can be intended.

### (Example)

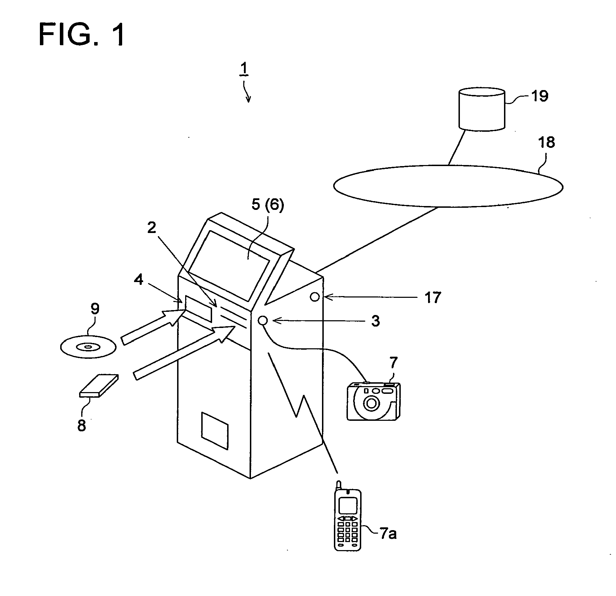

In order to describe the above-embodiment in detail, referring to Fig. 1 to Fig. 8, the information recording apparatus, recording program and recording medium according to an example of the present invention will be described.

Initially, referring to Fig. 1, the information recording apparatus according to an example of the present invention will be described.

An information recording apparatus 1 of the present example has a media loading section 2 for loading a recording medium (hereinafter, called media 8) for a digital camera such as a smart media, compact flash (registered trademark), memory stick (registered trademark), SD memory card, multimedia card, or for a cell phone with a camera; a device connection section 3 for connecting a photographic device (hereinafter, will be described as a digital camera 7) such as a digital camera 7 or a cell phone 7a with a camera by wiring, or wireless, infrared ray, a data input means such as a network connection section 17 by which data is down loaded from a server 19 through a communication network 18 such as internet, a recording medium loading section 4 for loading a recording medium 9 such as CD-R or DVD-R in which data read from the media 8 or the digital camera 7, or down-loaded data from the server 19 (static image data, moving image data, musical composition sound data, contents, application, hereinafter, simply called data), is recorded, an operation section 6 such as buttons, key-board, mouse, and a display section 5 such as LCD, CRT, (in the drawing, a touch-panel which combines the operation section 6 and the display section 5, is shown).

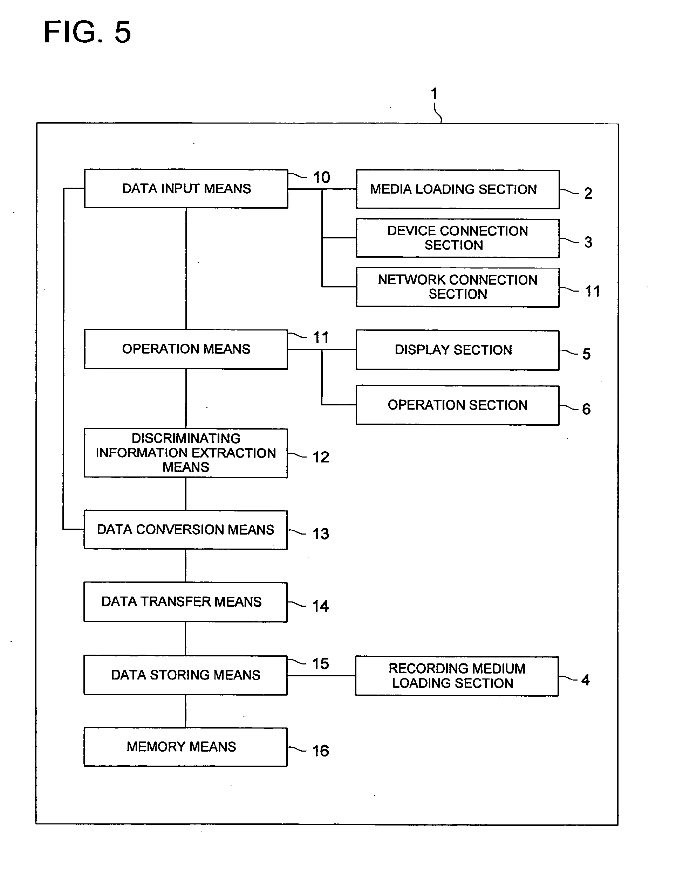

Further, the function of the information recording apparatus 1 is shown by a block diagram, Fig. 5. That is, it is provided with: a data input means 10 by which, by using a media loading section 2, device connection section 3, network connection section 17, data is inputted; an operation means 11 such as a display section 5 or operation section 6; a discriminating information extraction means 12 by which information for discriminating the recording medium 9 which can record data (hereinafter, called the discriminating information) is extracted from a specific area (for example, outside the logical address area) of the recording medium 9; a data conversion means 13 for converting the inputted data (for example, static image data) into data (for example, the moving image data) of a format reproducible by an image reproducing device such as a DVD player or DVD recorder, at need; a data transfer means 14 which controls data recording sequence; a data recording means 15 which writes data transferred by the data transfer means 14 in the recording medium 9, when the discriminating information is coincident to predetermined information; and a memory means 16 in which the data written in the data recording means 15 is temporarily stored, and by which the data written in the recording medium 9 or the information compared to the discriminating information is stored. Each of above-described means may also be structured as a hardware, however, a structure in which a recording program by which the computer is made to function at least as the discriminating information extraction means 12, the data recording means 15 is installed in the information recording apparatus 1 and executed, may also be allowable.

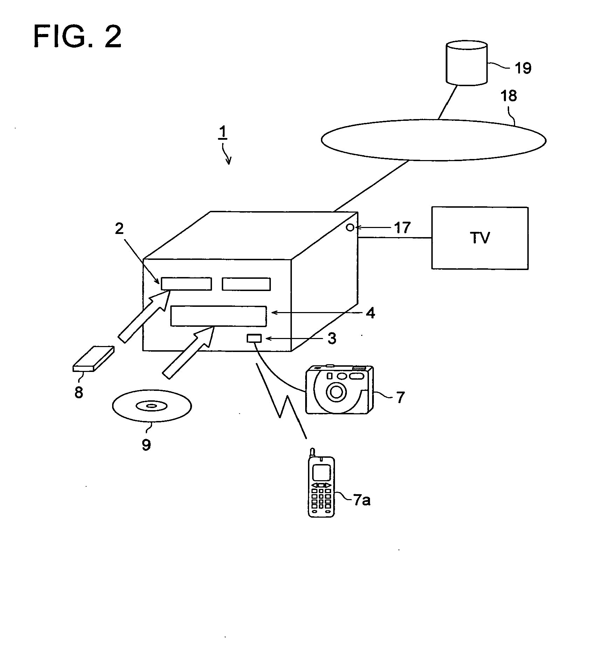

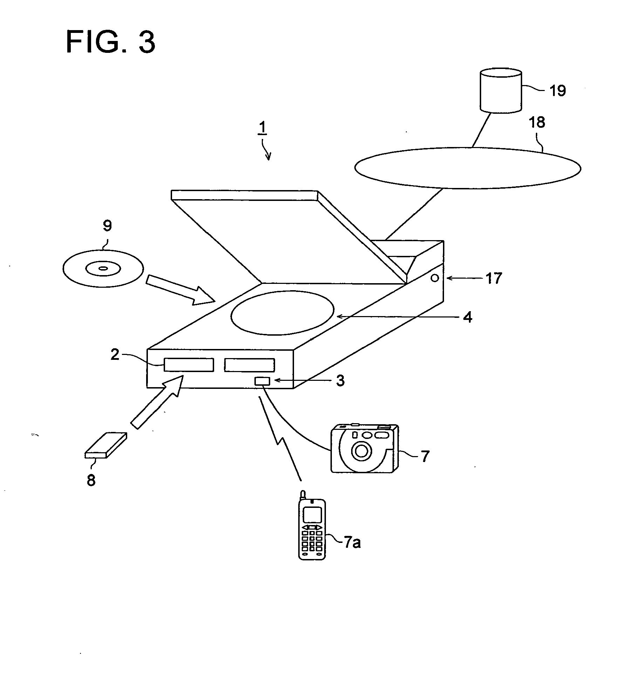

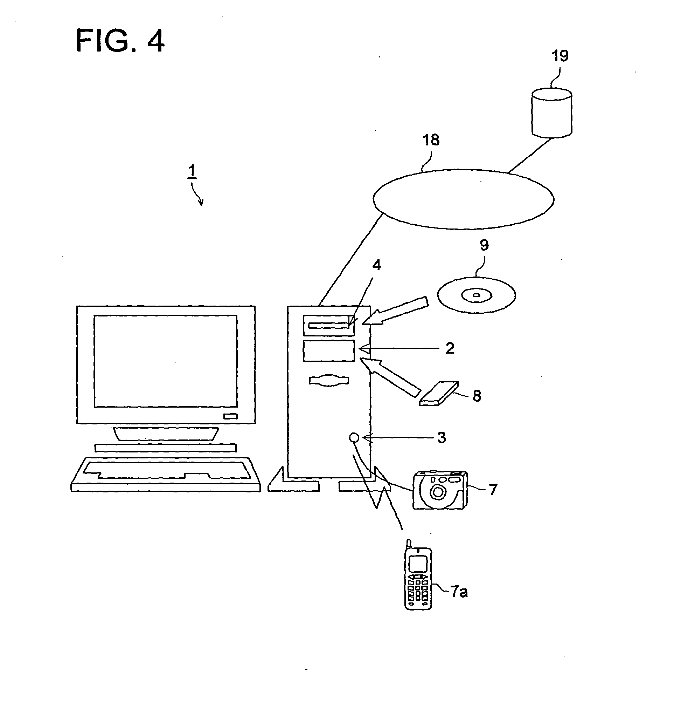

Hereupon, herein, in order to make the explanation easy, the data transfer means 14 and the data recording means 15 are made separated means for convenience, however, they may also be structured as one means. Further, in Fig. 1, the recording medium loading section 4 is used as a means for recording the data in the recording medium 9, however, the recording medium in which previously data such as the contents is recorded, is loaded, and the section may also be used as a means for inputting data from the recording medium. Further, in Fig. 1, the kiosk type information recording apparatus 1 which can be placed in shops such as the photographic shop or convenience store is written, however, the form of the information recording apparatus 1 is arbitrary, for example, as shown in Fig. 2, it is made as an exclusive set top box, as shown in Fig. 3, it may also be made as a portable writer, as shown in Fig. 4, a personal computer provided with a slot for loading media 8, a terminal for connecting the digital camera 7, a drive for writing the data in the recording medium 9, or DVD recorder may also be used.

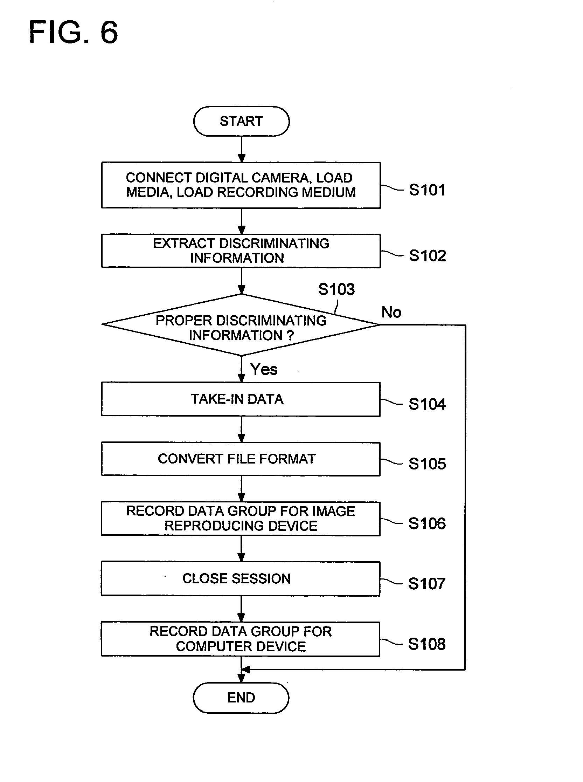

The sequence of recording the data offered by an user in the recording medium 9, will be described referring the flowchart of Fig. 6, by using the information recording apparatus 1 structured as described above. Hereupon, in the following, a case where 2 kinds of data are recorded in the recording medium 9 so that read data can be looked by both a personal computer and an image reproducing device, is shown, however, a case where the data reproducible by only one device is recorded in the recording medium 9 can also be applied in the same manner.

Initially, in step S101, together with a case where the media 8 is loaded in the media loading section 2 of the information recording apparatus 1, or, the digital camera 7 is connected to the device connection section 3, or the network connection section 17 is connected to the communication network 18, the recording medium 9 in which the discrimination information is previously recorded in the specific area, is loaded into the recording medium loading section 4. This recording medium 9 may also be purchased in a shop at which the information recording apparatus 1 is placed, or may also be purchased in another shop, or the recording medium 9 which is previously purchased and data is written in, may also be used again.

Next, in step S102, the discriminating information extraction means 12 extracts the discriminating information for discriminating the recording medium 9 which is used in the recording program, from the specific area of the recording medium 9. This discriminating information may also have been recorded in any area of the recording medium, however, when it is recorded in an area (logical address area) accessible by OS of a personal computer, there is a possibility that the discriminating information is rewritten, or the discriminating information is copied unfairly.

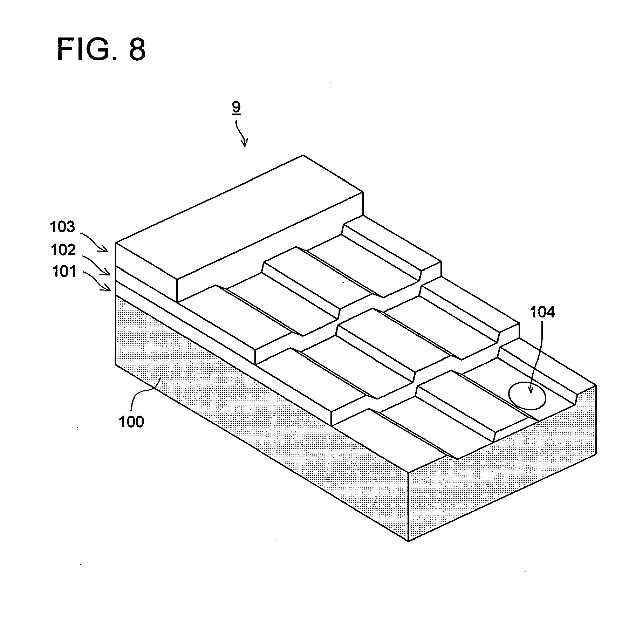

Herein, referring to Fig. 8, when a general structure of the recording medium 9 (CD-R) is described, CD-R is formed when, on a poly-carbonate substrate 100, an organic pigment layer 101 such as cyanin, phthalo-cyanine, azo, and a reflection layer 102 such as silver, and a protective layer 103 are laminated, and pits 104 are formed when a laser beam of a predetermined power is irradiated on the organic pigment layer 101, and the pigment is dissolved and the substrate is deformed, and the recording of the information is conducted.

Because the optimum value of laser beam power is different corresponding to the system of a laser head irradiating the laser beam or the kind of the organic pigment layer 101, it is necessary for the head drive to recognize what pigment is used for manufacturing CD-R, in order to securely conduct the writing, reading of the information. Therefore, the information such as the kind of the pigment used for the CD-R or the name of the manufacturer for manufacturing the CD-R is written in its innermost periphery on the manufacturing stage of the recording medium 9, the information is read by a firm-ware of the drive, and the firm-ware individually controls the laser head and conducts the adjustment of the laser power. In this manner, the area of the innermost periphery of the disk is used as an area which the information relating to the origin of CD-R is recorded, ordinarily, because the area is an area to which the OS of a personal computer can not access, in the present Example, it is structured in such a manner that, in this area (outside the logical address), the discriminating information of the recording medium 9 is written, and the altering of the discriminating information itself or its copy can not be conducted.

As described above, when the discriminating information used in the recording program is written in the outside logical address area of the recording medium 9, the recording medium 9 which is offered by the service offerer can be differentiated from another recording medium. Hereupon, the content of this discriminating information is not limited, however, for example, the name of manufacturer, software name, the name of kind of device which can correspond to, can be written, and the Manufacture code which is pressed in CD-R, DVD ± R/RW, DVD-RAM, may also be used, or the special area (a specially prepared area so that the information can be written) in the disk standard may also be used, or a unique structure so that the discriminating information are not duplicated by a plurality of recording media, may also be adopted, at least it is allowable in the cases where it can be used when the recording program judges whether inputted data is recorded. Further, this discriminating information may also be allowed when it is recorded in a format which the recording program can recognize, and when it is recorded as the data having no file format, the alteration of the discriminating information itself or its copy can be effectively prevented. Furthermore, the discriminating information may also be written by using an exclusive device by the service offerer after the manufacturing of the recording medium 9, however, in order to make the reading of the discriminating information sure, it is preferable that it is buried-in by the pre-press at the time of the manufacturing of the recording medium 9.

Then, in step S103, the discriminating information extracted from the recording medium 9 and the information stored in the memory means 16 are compared, and when the discriminating information is coincident to the predetermined information, in step S104, by using the data input means 10, the data recorded in the digital camera 7 or media 8 or the data recorded in the server 19, the data (static image data, moving image data, musical data, contents, application are included. Herein, it is assumed that it is a static image data recorded in the digital camera 7, or media 8) stored in the memory means 16 are read.

Hereupon, not only judging whether the discriminating information is recorded in the specific area of the recording medium 9 (for example, outside the logical address area), but judging whether the discriminating information is coincident to the predetermined information, is for the reason that there is a case where the information for discriminating recording medium (for example, the information of the manufacturer of the recording medium) is recorded in a specific area in the other recording medium. Accordingly, even a case where a discriminating information for discriminating the recording medium 9 is recorded in a specific area, the discriminating information is not an information used in the recording program, that is, when the discriminating information is not coincident to the predetermined information, the inputted data is not recorded.

Next, at need, in step S105, the static image data read by using the data conversion means 13 is converted into another file format data (herein, the moving image data of a format of the MPEG 1, MPEG 2, V-CD format data, DVD-Video format data). Although a method for producing the moving image data from the static image data is not particularly limited, for example, when the static image data is displayed as in a slide show, the data of the difference 0 for the slide display time is added to the static image data, and the moving image data is generated, or the differential data based on the slide-effect set in the slide show program is added to the static image data, and the moving image data can be generated. Hereupon, when the image data for the image reproducing device is not made, this step is not necessary. Further, when a case is made so that the original data or the data converted into for the image reproducing device is not unlimitedly used, at need, it may also be allowable that all of them or a part of them are scrambled, and can be reproduced only by the specific program.

Next, when the data for the image reproducing device is produced, in step S106, the data transfer means 14 transfers the data converted by the data conversion means 13 or the relating data (hereinafter, they are named generically the data group for image reproducing device) to a predetermined folder for writing, previously provided in the memory means 16. Then, the data recording means 15 reads the data group for image reproducing device from the folder, and records it inside the logical address area. Herein, when it is recorded in CD-R by using MPEG 1 or MPEG 2 as the image format of the moving image data, the recording medium 9 of Video-CD format can be produced, and when it is recorded in DVD-R by using MPEG 2 as the image format of the moving image data, the recording medium 9 of DVD-Video format can be produced.

Next, in step S107, the data recording means 15 closes the session at once, before the data for personal computer is recorded, in order to divide the area of the data which can use in the image reproducing device.

Next, in step S108, the data transfer means 14 transfers the inputted data, application for slide-displaying the static image data, the setting data of the slide show (hereinafter, they are named generically the data group for the personal computer) to a predetermined folder for writing previously provided in the memory means 16. Then, the data recording means 15 reads the data group for the personal computer from the folder, and records it in outside the data group for the image reproducing device previously recorded in the recording medium 9, and a series of writing processing is completed.

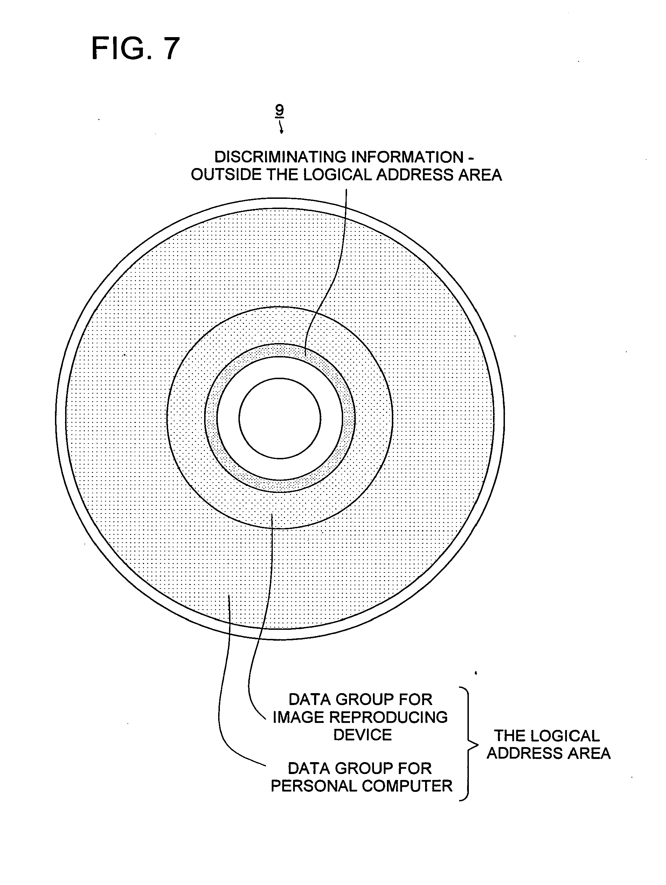

The recording medium 9 produced in the above sequence is as shown in Fig. 7, and outside the logical address area which is innermost of the disk type recording medium 9, a predetermined format (preferably, the data having no file format) discrimination information is previously recorded, and inside the logical address area of its outside, the data group for the image reproducing device is recorded, and further its outside, the data group for the personal computer is recorded.

Hereupon, in the above step, although the data transfer means 14 controls the writing order so that it can be read by both of the personal computer, and the image reproducing device, when the order of the writing is not mentioned, any side data may also be written earlier. Further, in the above step, it is structured in such a manner that, in step S101, after loading of the media 8 and connection of the digital camera 7 are conducted, in step S102, the discriminating information is extracted, however, initially the recording medium 9 is loaded into the recording medium loading section 4, the discriminating information is recorded in the recording medium 9, and when the discriminating information is coincident to the predetermined information, it may also be allowable that the loading of the media 8 and connection of the digital camera 7 are required.

As described above, in the recording medium 9 of the present Example, the discriminating information used in the recording program is previously written in the specific area (preferably outside the logical address area), and in the recording program or the information recording apparatus 1 which functions in the recording program, the discriminating information is extracted from the recording medium 9, and because only when the discriminating information is coincident to the predetermined information, the inputted data is recorded, the service offerer can force the recording medium 9 which is offered by his company to be used, and can intend the acceleration of use of the recording medium 9.

Hereupon, in the above each Example, the case where the data read from the digital camera 7 or media 8, film is written in the recording medium 9, is shown, however, the present invention is not limited to the above Examples, and also for a case where the arbitrary data is written in the recording medium 9 or memory means, the present invention can be applied in the same manner.

### INDUSTRIAL AVAILABLENESS

According to the information recording apparatus, recording program and recording medium of the present invention, discriminating information for discriminating the recording medium, which is used in a specific recording program, is recorded in a specific area (for example, outside a.logical address area to which can not be ordinarily accessed in the OS of a personal computer), and in the recording program or in the information recording apparatus which functions by the recording program, because the discriminating information is extracted from the specific area of the recording medium, and only when the discriminating information is coincident to previously stored information, inputted data (image data or musical composition sound data, contents, application) is recorded, the inputted data can be recorded only in the specific recording medium. Then, when such a system is provided, the service offerer can intends the acceleration of the use of the recording medium which is offered by his company.

## Claims

1. An information recording apparatus which is **characterized in that** it is at least provided with: a means for inputting data; a means for extracting an information for discriminating a recording medium from a specific area of the recording medium; a means for recording the inputted data in the recording medium when the extracted information and a predetermined information are compared, and the extracted information is coincident to the predetermined information.

2. The information recording apparatus written in Claim 1, wherein the specific area is an area outside the logical address area of a disk type recording medium.

3. The information recording apparatus written in Claim 1 or Claim 2, wherein the data is 1 or a plurality of data selected from static image data, moving image data, musical composition sound data, contents, application, and the data includes any one of data offered by an user, data previously stored in a memory means, or data which is down-loaded through a communication network.

4. A recording program which is **characterized in that**: it functions a computer at least as a means for extracting an information for discriminating a recording medium from a specific area of the recording medium, a means for recording an inputted data by comparing the extracted information with a predetermined information, and when the extracted information is coincident to the predetermined information.

5. The recording program written in Claim 4, wherein the specific area is an area outside the logical address area of a disk type recording medium.

6. The recording program written in Claim 4 or Claim 5, wherein the data is 1 or a plurality of data selected from static image data, moving image data, musical composition sound data, contents, application, and the data includes any one of data offered by an user, data previously stored in a memory means, or data which is down-loaded through a communication network.

7. A recording medium which is **characterized in that** information for discriminating the recording medium, which is used in a specific program, is previously recorded in a specific area.

8. The recording medium written in Claim 7, wherein the specific program is a program which, referring to the information, judges whether the inputted data is recorded.

9. The recording medium written in Claim 7 or Claim 8, wherein the specific area is an area outside the logical address area of a disk type recording medium.
